# EUROPÄISCHE PATENTSCHRIFT

(11) **EP 1 681 192 B1**
(45) Veröffentlichungstag und Bekanntmachung des Hinweises auf die Patenterteilung: **20.02.2008**
(21) Anmeldenummer: 05025365.7
(22) Anmeldetag: 21.11.2005
(51) Int. Cl.: B60H 1/22

(54) **Fahrzeugheizsystem mit einem brennstoffbetriebenen Heizgerät und Verfahren zu dessen Betrieb**
Vehicle heating system comprising a combustion heater and method for controlling such a system
Système de chauffage d'un véhicule comprenant une chauffage autonomme et son procédé de commande

(30) Priorität: 12.01.2005 DE 102005001466
(43) Veröffentlichungstag der Anmeldung: 19.07.2006
(73) Patentinhaber: J. Eberspächer GmbH & Co. KG, 73730 Esslingen (DE)
(72) Erfinder: Blaschke, Walter, 73779 Deizisau (DE); Burner, Erwin, 73099 Adelberg (DE)
(74) Vertreter: Ruttensperger, Bernhard

(56) Entgegenhaltungen:
- DE-A1- 10 143 459
- DE-A1- 19 924 329
- DE-C1- 19 605 152
- US-A- 5 878 950

## Beschreibung

Die vorliegende Erfindung betrifft ein Heizsystem für ein Fahrzeug, welches Heizsystem ein brennstoffbetriebenes Heizgerät umfasst sowie eine Ansteuervorrichtung, durch welche das brennstoffbetriebene Heizgerät entsprechend den gegebenen Erfordernissen in Betrieb bzw. außer Betrieb gesetzt werden kann und selbstverständlich auch im Verbrennungsbetrieb gehalten werden kann.

Derartige brennstoffbetriebene Heizgeräte können in Fahrzeugen grundsätzlich in zwei unterschiedlichen Betriebsmodi betrieben werden. Ein erster Betriebsmodus ist der Standheizungs-Betriebsmodus, in welchem das Heizgerät vor Inbetriebnahme eines Fahrzeugs in Betrieb gesetzt wird und betrieben wird, um das Fahrzeug, also beispielsweise den Fahrgastraum oder auch eine Brennkraftmaschine desselben, für den nachfolgend aufzunehmenden Betrieb vorzukonditionieren. Ein zweiter möglicher Betriebsmodus ist der so genannte Zuheizer-Betriebsmodus. Dieser Zuheizer-Betriebsmodus wird beispielsweise bei modernen Dieselaggregaten bei Inbetriebnahme bzw. nach Inbetriebnahme derselben durchgeführt, um zusätzlich zu der im Betrieb derartiger Brennkraftmaschinen entstehenden Verbrennungswärme noch weitere Wärmeenergie zur Verfügung stellen zu können. Dies ist häufig daher erforderlich, da moderne Dieselbrennkraftmaschinen hinsichtlich ihres energetischen Haushalts so optimiert sind, dass ein Großteil der Verbrennungsenergie in kinetische Energie umgesetzt wird und somit nur noch ein vergleichsweise geringer Energieteil zur Erwärmung des Fahrzeugs genutzt werden kann. Um hier sowohl im Bereich der Brennkraftmaschine als auch im Bereich eines Fahrgastraums die gewünschten thermischen Verhältnisse bereitstellen zu können, wird also parallel zum Betrieb in der Brennkraftmaschine auch das Heizgerät betrieben.

US 5 878 950 offenbart ein solches Heizgerät.

Unabhängig davon, in welchem Betriebsmodus ein derartiges für die beiden angesprochenen Betriebsmodi einsetzbares Heizgerät zu betreiben ist, besteht grundsätzlich der Wunsch bzw. die Anforderung, bei startendem Verbrennungsbetrieb möglichst schnell in den Bereich der gewünschten bzw. erforderlichen Heizleistung des Heizgeräts zu gelangen. Zum einen ist dies daher vorteilhaft, da dann möglichst schnell der an sich durchzuführende Betrieb als Standheizung oder als Zuheizer erlangt werden kann. Zum anderen ist die Startphase eines derartigen brennstoffbetriebenen Heizgerätes hinsichtlich des Schadstoffausstoßes kritisch und soll daher möglichst kurz gehalten werden. Zu berücksichtigen sind jedoch dabei die Umgebungsparameter. Im Allgemeinen wird ein derartiges brennstoffbetriebenes Heizgerät nur bei vergleichsweise niedrigen Umgebungstemperaturen in Betrieb gesetzt, da nur dann das Bereitstellen zusätzlicher Wärme erforderlich ist. Bei derartigen Umgebungsbedingungen ist jedoch im Allgemeinen auch das Bordspannungsnetz eines Fahrzeugs durch weitere Verbraucher elektrischer Energie häufig stärker belastet bzw. ist durch die vergleichsweise niedrigen Umgebungstemperaturen auch nur geringer belastbar.

Es ist die Aufgabe der vorliegenden Erfindung, ein Heizsystem für ein Fahrzeug bzw. ein Verfahren zum Starten eines Heizgeräts für ein Fahrzeug vorzusehen, mit welchem eine optimierte Durchführung der Startprozedur möglich ist.

Gemäß einem ersten Aspekt der vorliegenden Erfindung wird diese Aufgabe gelöst durch ein Heizsystem für ein Fahrzeug, umfassend ein brennstoffbetriebenes Heizgerät und eine Ansteuervorrichtung zum Ansteuern des Heizgerätes zum Betreiben desselben, wobei die Ansteuervorrichtung dazu ausgebildet ist, in einer Verbrennungsbetrieb-Startphase das Heizgerät in Abhängigkeit davon, ob dieses als Zuheizer zu betreiben ist oder als Standheizung zu betreiben ist, zur Durchführung unterschiedlicher Startprozeduren anzusteuern.

Bei dem erfindungsgemäßen System kann also dahingehend differenziert werden, in welcher Betriebsart ein brennstoffbetriebenes Heizgerät zu betreiben ist. Angepasst an die vorzusehende Betriebsart kann auch die Startprozedur mit an die Umgebungsbedingungen bzw. die vorzusehende Betriebsart optimiert angepassten Parametern durchgeführt werden.

Beispielsweise kann vorgesehen sein, dass das Heizgerät umfasst: eine Brennkammerbaugruppe mit einem porösen Verdampfermedium, eine elektrisch betreibbare Heizeinrichtung zur Erwärmung des porösen Verdampfermediums, ein elektrisch betreibbares Zündorgan zum Zünden eines in der Brennkammerbaugruppe vorhandenen Luft/Brennstoffdampf-Gemisches, eine Förderpumpe für flüssigen Brennstoff, ein Verbrennungsluftgebläse.

Gemäß einem besonders vorteilhaften Aspekt kann bei dem erfindungsgemäßen System vorgesehen sein, dass die Ansteuervorrichtung dazu ausgebildet ist, in der Verbrennungsbetrieb-Startphase die Heizeinrichtung oder/und das Zündorgan in Abhängigkeit von der vorzusehenden Betriebsart des Heizgerätes als Standheizer oder Zuheizer mit unterschiedlicher Heizleistung zu betreiben. Das Vorsehen unterschiedlicher Heizleistungen bei in der Startphase elektrisch zu betreibenden Systembereichen ermöglicht die Berücksichtigung, dass beispielsweise im Zuheizerbetrieb das Bordspannungssystem stärker belastbar ist, als im Standheizungsbetrieb. Im Zuheizerbetrieb ist nämlich die Spannungsversorgung nicht nur durch eine Fahrzeugbatterie sichergestellt, sondern es kann gleichzeitig auch durch das in dieser Phase auch betriebene Antriebsaggregat eines Fahrzeugs vermittels einer Lichtmaschine oder einer Starter/Generator-Anordnung oder dergleichen elektrische Energie in das Bordspannungssystem eingespeist werden. Im Gegensatz dazu ist bei Durchführung eines Standheizungsbetriebs die einzige Quelle für elektrische Energie die in einem Fahrzeug vorgesehene Batterie, die vor allem bei niedrigen Umgebungstemperaturen bei zu starker Belastung des Bordspannungssystems sehr leicht überlastet werden kann. Insofern muss und kann erfindungsgemäß also bei Durchführung eines Standheizungsbetriebs berücksichtigt werden, dass das Bordspannungssystem nur geringer belastbar ist, als dies im Zuheizerbetrieb möglich ist.

Weiter kann vorgesehen sein, dass die Ansteuervorrichtung dazu ausgebildet ist, in der Verbrennungsbetrieb-Startphase die Heizeinrichtung oder/und das Zündorgan in Abhängigkeit von der vorzusehenden Betriebsart des Heizgerätes als Standheizer oder Zuheizer über unterschiedliche Startbetriebzeitdauern zu betreiben. Neben oder zu dem Vorsehen unterschiedlicher Heizleistungen kann also durch Vorgeben unterschiedlicher Zeitdauern, über welche hinweg die Startprozeduren durchgeführt werden, sichergestellt werden, dass ausreichend Energie in das Heizgerät eingetragen wird und somit im Verlaufe der Startprozedur die erforderlichen Bedingungen bereitgestellt werden können, um ein in einer Brennkammer vorhandenes zündfähiges Gemisch aus Verbrennungsluft und Brennstoffdampf tatsächlich auch zünden zu können.

Unter Berücksichtigung der vorangehend dargelegten Aspekte ist es bei dem erfindungsgemäßen System also besonders vorteilhaft, wenn dafür gesorgt ist, dass die Ansteuervorrichtung dazu ausgebildet ist, dann, wenn das Heizgerät als Zuheizer zu betreiben ist, die Heizeinrichtung oder/und das Zündorgan mit größerer Heizleistung über eine kürzere Startbetriebzeitdauer hinweg zu betreiben, und dann, wenn das Heizgerät als Standheizung zu betreiben ist, die Heizeinrichtung oder/und das Zündorgan mit geringerer Heizleistung über eine längere Startbetriebzeitdauer hinweg zu betreiben.

Wie bereits vorangehend dargelegt, wird in Abhängigkeit davon, in welcher Betriebsart ein Heizgerät zu betreiben ist, in der Startphase das Bordspannungssystem unterschiedlich belastbar sein. Wird dabei beispielsweise festgestellt, dass eine Versorgungsspannung unter einer Zuheizerbetrieb-Startspannungsschwelle ist oder unter diese fällt, ist es vorteilhaft, wenn die Ansteuervorrichtung dazu ausgebildet ist, bei vorzusehendem Zuheizerbetrieb das Heizgerät mit der für den Standheizungsbetrieb vorzusehenden Startprozedur zu starten. Auf diese Art und Weise ist sichergestellt, dass selbst bei für die Zuheizungsbetrieb-Startprozedur an sich zu geringer Bordspannung das Heizgerät gestartet werden kann, wenngleich hierfür beispielsweise dann eine etwa längere Zeitdauer erforderlich ist.

Als weitere Sicherheitsmaßnahme kann vorgesehen sein, dass die Ansteuervorrichtung dazu ausgebildet ist, dann, wenn eine Versorgungsspannung unter einer Standheizungsbetriebs-Startspannungsschwelle ist oder unter diese fällt, das Starten des Heizgeräts zu unterbinden oder zu beenden.

Gemäß einem weiteren Aspekt wird die eingangs genannte Aufgabe gelöst durch ein Verfahren zum Starten eines brennstoffbetriebenen Heizgerätes für ein Fahrzeug, umfassend die Maßnahmen: a) Festlegen, ob das Heizgerät als Standheizung oder als Zuheizer zu betreiben ist, b) dann, wenn das Heizgerät als Standheizung zu betreiben ist, Starten der Verbrennung mit einer Standheizungsbetrieb-Startprozedur, c) dann, wenn das Heizgerät als Zuheizer zu betreiben ist, Starten der Verbrennung mit einer von der Standheizungsbetrieb-Startprozedur sich unterscheidenden Zuheizerbetrieb-Startprozedur.

Wie bereits eingangs dargelegt, wird erfindungsgemäß also dahingehend differenziert, in welcher Art und Weise ein Heizgerät zu betreiben ist, um die Startprozedur in besonders vorteilhaft an die Umgebungsbedingungen angepasste Art und Weise durchführen zu können.

Beispielsweise kann derart vorgegangen werden, dass die Standheizungsbetrieb-Startprozedur sich von der Zuheizerbetrieb-Startprozedur durch eine längere Zeitdauer der Startprozedur unterscheidet. Weiterhin ist es möglich, dass die Standheizungsbetrieb-Startprozedur sich von der Zuheizerbetrieb-Startprozedur durch eine geringere maximale Leistung wenigstens eines zum Starten elektrisch zu betreibenden Organs des Heizgerätes unterscheidet.

Ein wesentlicher Parameter für die Durchführung einer zuverlässig zum Zünden führenden Startprozedur bei einem Heizgerät ist die während dieser Startprozedur eingetragene Energie, die letztendlich zur thermischen Konditionierung der Brennkammerbaugruppe eines Heizgeräts führt. Es wird daher weiter vorgeschlagen, dass die zur Durchführung der Standheizungsbetrieb-Startprozedur aufzubringende Energie näherungsweise der zur Durchführung der Zuheizerbetrieb-Startprozedur aufzubringenden Energie entspricht.

Die vorliegende Erfindung wird nachfolgend mit Bezug auf die beliegenden Zeichnungen detailliert erläutert. Es zeigt:
- Fig. 1: eine schematische Ansicht eines erfindungsgemäßen Heizsystems;
- Fig. 2: über der Zeit aufgetragen die in einer Startphase aufgebrachte elektrische Leistung für verschiedene Startprozeduren.

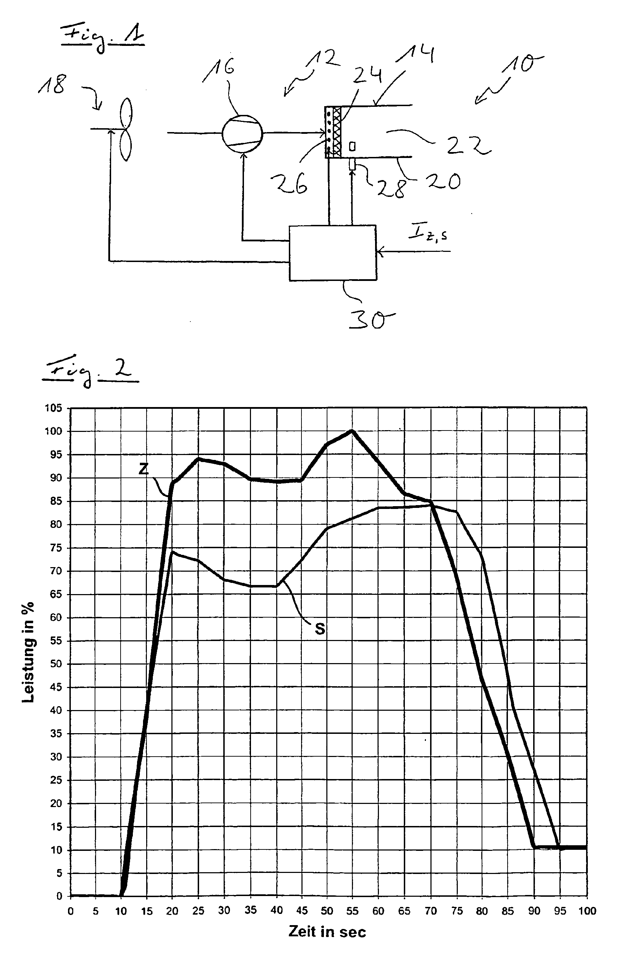

In Fig. 1 ist ein Heizsystem 10 dargestellt, bei welchem die vorliegende Erfindung implementiert sein kann. Dieses Heizsystem 10 umfasst ein allgemein mit 12 bezeichnetes Heizgerät, das als wesentliche Systembestandteile eine Brennkammerbaugruppe 14, eine Förderpumpe 16 zum Fördern von flüssigem Brennstoff zur Brennkammerbaugruppe 14 sowie ein Verbrennungsluftgebläse 18 zum Fördern von Verbrennungsluft zur Brennkammerbaugruppe 14 umfasst. Die Brennkammerbaugruppe 14 wiederum umfasst ein beispielsweise allgemein topfartig ausgebildetes Brennkammergehäuse 20, das eine Brennkammer 22 umschließt. In diesem Brennkammergehäuse 20 bzw. in der Brennkammerbaugruppe 14 ist ein poröses Verdampfermedium 24 vorgesehen. Dieses nimmt den von der Pumpe 16 herangeförderten flüssigen Brennstoff auf, verteilt ihn aufgrund der durch die Porosität generierten Kapillarförderwirkung in seinem Volumenbereich und gibt den so verteilten Brennstoff dann als Brennstoffdampf in Richtung Brennkammer 22 ab. Um diese Brennstoffabdampfung zu unterstützen, ist eine elektrisch betreibbare Heizeinrichtung 26 vorgesehen, die beispielsweise in Form einer Heizspirale bzw. Heizwendel oder dergleichen ausgebildet sein kann. Femer ist ein elektrisch betreibbares Zündorgan 28 beispielsweise in Form eines Glühzündstifts vorhanden. Während die Heizeinrichtung 26 primär die Aufgabe hat, durch Erwärmung des porösen Verdampfermediums 24 und somit auch des darin enthaltenen flüssigen Brennstoffs dessen Abdampfungsrate in Richtung zur Brennkammer 22 zu erhöhen, dient das Zündorgan 28 dazu, lokal so hohe Temperaturen bereizustellen, dass die zum Zünden des in der Brennkammer 22 vorhandenen Gemisches aus Verbrennungsluft und Brennstoffdampf erforderliche Temperatur bereitgestellt werden und somit die Verbrennung gestartet werden kann. Nach erfolgter Zündung kann das Zündorgan 28 abgeschaltet werden, ebenso wie die Heizeinrichtung 26, da dann die die weitere Brennstoffabdampfung sicherstellende Wärme durch die Verbrennung selbst generiert werden kann. Selbstverständlich ist es möglich, beispielsweise die Heizeinrichtung 26 auch während der ablaufenden Verbrennung, also während des Verbrennungsbetriebs des Heizgeräts 12 unterstützend zu erregen.

Die verschiedenen zum Betreiben des Heizgeräts 12 in bzw. außer Betrieb zu setzenden Systembereiche, also die Heizeinrichtung 26, das Zündorgan 28, die Pumpe 16 und das Verbrennungsluftgebläse 18 stehen unter der Ansteuerung einer Ansteuervorrichtung 30. Diese steuert diese verschiedenen Systembereiche 26, 28, 16, 18 derart aufeinander abgestimmt an, dass sich die gewünschte Betriebsart des Heizgeräts 14 einstellt. Auch weitere hier nicht dargestellte elektrisch anzusteuernde bzw. zu betreibende Systembereiche können unter der Ansteuerung der Ansteuervorrichtung 30 stehen bzw. gemäß der Vorgabe der Ansteuervorrichtung 30 in Betrieb gesetzt werden. Dies kann beispielsweise ein Heizluftgebläse sein, durch welches vermittels des Heizgeräts 12 erwärmte Luft in einen Fahrgastraum gefördert wird. Auch eine Kühlmittelpumpe eines Kühlkreislaufs einer Brennkraftmaschine kann gemäß der Vorgabe der Ansteuervorrichtung 30 in Betrieb gesetzt werden, beispielsweise dann, wenn die im Heizgerät 12 bereitgestellte thermische Energie auf das Kühlmittel einer Brennkraftmaschine übertragen werden soll, um diese beispielsweise vor dem Inbetriebnehmen vorzukonditionieren bzw. nach Inbetriebnahme zusätzlich und somit beschleunigt auf die gewünschte Betriebstemperatur zu bringen.

Um den gewünschten Betrieb durchführen zu können, empfängt die Ansteuervorrichtung 30 verschiedene Eingaben. Dies kann beispielsweise das Signal eines Außentemperatursensors, das Signal eines Fahrzeuginnenraum-Temperatursensors, das Signal eines Fahrzeugkühlmittel-Temperatursensors sein. Auch andere Umgebungsparameter, wie z. B Information darüber, in welcher Art und Weise das Heizgerät 12 betrieben werden soll, in Fig. 1 als I_{ZS} bezeichnet, kann der Ansteuervorrichtung 30 zugeführt werden und zur Ansteuerung der verschiedenen angesprochenen Systembereiche genutzt werden.

Ein derartiges Heizgerät 12 kann in verschiedenen Betriebsarten betrieben werden. Eine diese Betriebsarten ist der Standheizungsbetrieb, in dem das Heizgerät 12 vor der Inbetriebnahme eines Fahrzeugs in Betrieb gesetzt wird, um das Fahrzeug vorzukonditionieren. Diese Vorkonditionierung kann, wie bereits angesprochen, sowohl den Fahrgastinnenraum als auch das Antriebsaggregat eines Fahrzeugs betreffen. Die Information, dass ein Standheizungsbetrieb durchzuführen ist, kann durch einen im Ansteuergerät 30 generierten und in diesem Falle dann die Information I_{S} repräsentierenden Befehl bereitgestellt werden, kann selbstverständlich aber auch durch manuelle Betätigung eines Benutzers, beispielsweise vermittels einer Fernsteuerung, bereitgestellt werden. Empfängt oder generiert die Ansteuervorrichtung 30 einen derartigen Befehl, werden nachfolgend die verschiedenen Systembereiche so in Betrieb gesetzt, dass der gewünschte Standheizungsbetrieb zur gewünschten Zeit begonnen wird.

Eine weitere Betriebsart ist der so genannte Zuheizerbetrieb. In dieser Betriebsart wird das Heizgerät 12 parallel zu einem Antriebsaggregat, also beispielsweise einer Dieselbrennkraftmaschine, eines Fahrzeugs betrieben. In dieser Betriebsart dient das Heizgerät 12 dazu, zusätzliche thermische Energie bereitzustellen, um beispielsweise den Fahrzeuginnenraum beschleunigt erwärmen zu können, oder beispielsweise auch die Brennkraftmaschine schneller auf die gewünschte Betriebstemperatur bringen zu können.

Während die beiden vorangehend angesprochenen Betriebsarten grundsätzlich dann durchzuführen sind, wenn vergleichsweise niedrige Umgebungstemperaturen vorherrschen, die das Bereitstellen zusätzlicher thermischer Energie (im Zuheizerbetrieb) oder ausschließlicher thermischer Energie (im Standheizungsbetrieb) erforderlich machen, sind für die verschiedenen Betriebsarten die systembedingten Umgebungsbedingungen sehr unterschiedlich. Im Standheizungsbetrieb ist die einzige Energiequelle, die genutzt werden kann, um die verschiedenen elektrisch betreibbaren Systembereiche zu aktivieren, die in einem Fahrzeug vorgesehene Batterie. Je nach Ladezustand derselben und je nach Umgebungstemperatur ist diese unterschiedlich stark belastbar. Im Allgemeinen ist davon auszugehen, dass im Standheizbetrieb das Bordspannungssystem, welches dabei nur durch die Batterie gespeist wird, vergleichsweise gering belastbar ist. Im Gegensatz dazu ist im Zuheizerbetrieb das Antriebsaggregat bereits in Betrieb gesetzt, so dass es eine Lichtmaschine, einen Starter/Generator oder dergleichen zur zusätzlichen Einspeisung elektrischer Energie in das Bordspannungssystem betreiben kann. In dieser Phase ist die Gefahr einer Überlastung des Bordspannungssystems vergleichsweise gering.

Die vorliegende Erfindung nutzt diese verschiedenen Umgebungsbedingungen aus, um, je nach geforderter Betriebsart des Heizgeräts 12, dieses optimiert starten zu können. Die Startphase ist vor allem daher kritisch, weil eine Vielzahl verschiedener Verbraucher elektrischer Energie gleichzeitig in Betrieb zu setzen ist, möglicherweise parallel zu weiteren Verbrauchern elektrischer Energie, wie z. B. einer Sitzheizung, heizbaren Fensterscheiben oder heizbaren Außenspiegeln. Andererseits ist die Startphase aber auch hinsichtlich des Schadstoffausstoßes und der Ablagerung von Verbrennungsrückständen in verschiedenen Bereichen eines Heizgeräts 12 kritisch, da in dieser Phase die Verbrennung teilweise nur unvollständig bzw. bei vergleichsweise niedrigen Verbrennungstemperaturen ablaufen wird. In jedem Falle besteht also die Zielsetzung, die Startphase so kurz als möglich zu halten.

Das erfindungsgemäße Heizsystem ist so ausgelegt, dass es bei Durchführung einer Startprozedur für das Heizgerät 12 dahingehend differenziert, ob dieses als Standheizung oder als Zuheizer zu betreiben ist. Dies wird im Folgenden auch mit Bezug auf das Diagramm der Fig. 2 verdeutlicht. Man erkennt dort zwei Kurven Z und S, wobei die Kurve Z die zum Betreiben der Heizeinrichtung 26 oder/und des Zündorgans 28 aufgebrachte elektrische Leistung im Zuheizerbetrieb darstellt, während die Kurve S die elektrische Leistung im Standheizungsbetrieb darstellt. Man erkennt deutlich, dass im Zuheizungsbetrieb unmittelbar nach Erzeugung des Startbefehls beispielsweise zum Zeitpunkt Null die Heizleistung im hochgefahren wird und auf sehr hohem Niveau z.B. im Bereich von 250 W - 300 W verharrt. Diese Heizleistung wird dann während einer Startzeitdauer von etwa 1 Minute beibehalten. Nach Ablauf dieser Startzeitdauer wird diese Heizleistung deutlich gesenkt, auf einen Wert von etwa 20 W - 30 W. Dies ist die elektrische Leistung, die beispielsweise dann nach erfolgtem Start dazu aufgebracht wird, um die Heizeinrichtung 26 zumindest während der ersten Zeitdauer des dann ablaufenden Verbrennungsbetriebs unterstützend zu betreiben.

In dem Fall, in dem das Heizgerät 12 als Standheizung zu betreiben ist, wird nach Generierung des Startbefehls die Heizleistung nur bis etwa 200 W hochgefahren und über eine etwas längere Startzeitdauer im Bereich dieser Heizleistung gehalten, die deutlich geringer ist, als diejenige Heizleistung, die während der Startphase im Zuheizerbetrieb vorgesehen ist. Da die Zeitdauer der Startphase im Standheizungsbetrieb im Vergleich zur Startzeitdauer im Zuheizbetrieb jedoch länger ist, ist sichergestellt, dass in beiden Betriebsarten bzw. bei beiden Startprozeduren näherungsweise die gleiche elektrische Energie in das System eingespeist wird, die im Wesentlichen vollständig auch in thermische Energie umgesetzt wird. Diese Energie ist im Wesentlichen bestimmt durch die Fläche unter der jeweiligen Kurve, die für die beiden Startprozeduren näherungsweise gleich ist.

Durch die erfindungsgemäß vorzunehmende Differenzierung dahingehend, in welcher Art und Weise nachfolgend das Heizgerät 12 zu betreiben ist, wird es möglich, unter Berücksichtigung der Umgebungsbedingungen die Startprozedur jeweils so schnell als möglich durchzuführen, gleichwohl jedoch eine Überlastung vor allem des Bordspannungssystems zu vermeiden. Es kann somit grundsätzlich vermieden werden, dass beispielsweise auch bei vorzusehendem Zuheizerbetrieb das Heizgerät 12 mit der für den Standheizungsbetrieb vorgesehenen Startprozedur gestartet wird, was im Zuheizerbetrieb eine unnötig lange und die zur Verfügung stehende elektrische Energie nicht im optimalen Ausmaß ausnutzende Startprozedur zur Folge hätte. Die Differenzierung dahingehend, in welcher Betriebsart das Heizgerät 12 zu betreiben ist und somit welche Startprozedur für das Heizgerät 12 zu wählen ist, kann, wie vorangehend bereits angedeutet, auf Grundlage verschiedener für die Ansteuervorrichtung 30 bereitgestellter bzw. möglicherweise darin selbst generierter Informationen erfolgen. Bei gewünschtem Standheizungsbetrieb kann ein entsprechender Befehl in die Ansteuervorrichtung 30 eingegeben werden bzw. durch ein Zeitglied in dieser selbst erzeugt werden. Bei durchzuführendem Zuheizerbetrieb kann beispielsweise durch ein an sich der Brennkraftmaschine zugeordnetes Ansteuergerät der Ansteuervorrichtung 30 Information darüber zugeführt werden, dass das Antriebsaggregat in Betrieb gesetzt ist und dass der Zuheizerbetrieb erforderlich ist.

Es ist selbstverständlich, dass bei Durchführung der verschiedenen Startprozeduren dann jeweils noch weitergehende Anpassungen an die Umgebungsbedingungen vorgenommen werden können. So kann beispielsweise in Abhängigkeit von der Umgebungstemperatur die Zeitdauer der Startprozedur eingestellt werden. Auch die in einem Bordspannungssystem verfügbare elektrische Spannung kann als Variationsparameter vorgesehen werden. Ist diese nämlich nicht ausreichen hoch, um die an sich vorgegebene elektrische Leistung erreichen zu können, kann beispielsweise auch die Zeitdauer angepasst werden. Grundsätzlich kann erfindungsgemäß so vorgegangen werden, dass dann, wenn diese Versorgungsspannung unter einen für den Zuheizerbetrieb vorgesehenen Spannungsschwellenwert fällt, dessen Unterschreiten zur Folge hat, dass die für den Zuheizerbetrieb vorgesehene Startprozedur nicht mehr in der erforderlichen Qualität vorgenommen werden kann, durch das Ansteuergerät 30 das Heizgerät 12 dann, wenn gleichwohl der Zuheizerbetrieb vorzusehen ist, mit der Startprozedur für den Standheizungsbetrieb in Betrieb gesetzt werden, welche, wie vorangehend dargelegt, nur eine geringere elektrische Leistung und somit auch eine geringere Betriebsspannung erfordert. Wird auch ein für den Standheizungsbetrieb bzw. die entsprechende Startprozedur vorgesehener Schwellenwert unterschritten, was signalisiert, dass auch die Startprozedur für den Standheizungsbetrieb nicht mehr in der erforderlichen Qualität durchgeführt werden kann, so kann durch die Ansteuervorrichtung das Starten des Heizgeräts 12 vollständig unterbunden werden bzw. eine bereits ablaufende Startprozedur beendet werden, da dann davon auszugehen ist, dass ein Defekt beispielsweise im Bordspannungssystem vorhanden ist. In diesem Falle kann beispielsweise eine entsprechende Warnung generiert werden.

Es ist weiterhin selbstverständlich, dass in Anpassung an die verschiedenen Startprozeduren, in welchen das Zündorgan 28 oder/und die Heizeinrichtung 26 in unterschiedlicher Art und Weise in Betrieb gesetzt werden können und insbesondere auch über unterschiedliche Zeitdauern hinweg betrieben werden können, andere Systembereiche entsprechend angepasst angesteuert werden. So kann beispielsweise durch die Ansteuervorrichtung 30 die Pumpe 16 für den flüssigen Brennstoff jeweils dann in Betrieb genommen werden, wenn nach ausreichender Vorwärmzeitdauer davon ausgegangen werden kann, dass die thermischen Bedingungen zum ausreichenden Verdampfen von Brennstoff und zum nachfolgenden Zünden bereitgestellt sind. Entsprechendes gilt beispielsweise für das Verbrennungsluftgebläse 18. Auch dieses kann so angesteuert werden, dass es erst dann, wenn die zum Verdampfen und Zünden erforderlichen thermischen Bedingungen vorliegen, in Betrieb gesetzt wird, um vorangehend das Kühlen der Brennkammerbaugruppe 14 durch die durch diese hindurch strömende vergleichsweise kalte Verbrennungsluft zu vermeiden.

## Patentansprüche

1. Heizsystem für ein Fahrzeug, umfassend ein brennstoffbetriebenes Heizgerät (12) und eine Ansteuervorrichtung (30) zum Ansteuern des Heizgerätes (12) zum Betreiben desselben, **dadurch gekennzeichnet dass** die Ansteuervorrichtung (30) dazu ausgebildet ist, in einer Verbrennungsbetrieb-Startphase das Heizgerät (12) in Abhängigkeit davon, ob dieses als Zuheizer zu betreiben ist oder als Standheizung zu betreiben ist, zur Durchführung unterschiedlicher Startprozeduren anzusteuern.

2. Heizsystem nach Anspruch 1,
**dadurch gekennzeichnet, dass** das Heizgerät (12) umfasst:
- eine Brennkammerbaugruppe (14) mit einem porösen Verdampfermedium (24),
- eine elektrisch betreibbare Heizeinrichtung (26) zur Erwärmung des porösen Verdampfermediums (24),
- ein elektrisch betreibbares Zündorgan (28) zum Zünden eines in der Brennkammerbaugruppe (14) vorhandenen Luft/Brennstoffdampf-Gemisches,
- eine Förderpumpe (16) für flüssigen Brennstoff,
- ein Verbrennungsluftgebläse (18).

3. Heizsystem nach Anspruch 2,
**dadurch gekennzeichnet, dass** die Ansteuervorrichtung (30) dazu ausgebildet ist, in der Verbrennungsbetrieb-Startphase die Heizeinrichtung (126) oder/und das Zündorgan (28) in Abhängigkeit von der vorzusehenden Betriebsart des Heizgerätes (12) als Standheizer oder Zuheizer mit unterschiedlicher Heizleistung zu betreiben.

4. Heizsystem nach Anspruch 2 oder 3,
**dadurch gekennzeichnet, dass** die Ansteuervorrichtung (30) dazu ausgebildet ist, in der Verbrennungsbetrieb-Startphase die Heizeinrichtung (26) oder/und das Zündorgan (28) in Abhängigkeit von der vorzusehenden Betriebsart des Heizgerätes (12) als Standheizer oder Zuheizer über unterschiedliche Startbetriebzeitdauem zu betreiben.

5. Heizsystem nach Anspruch 3 und Anspruch 4,
**dadurch gekennzeichnet, dass** die Ansteuervorrichtung (30) dazu ausgebildet ist, dann, wenn das Heizgerät (12) als Zuheizer zu betreiben ist, die Heizeinrichtung (26) oder/und das Zündorgan (28) mit größerer Heizleistung über eine kürzere Startbetriebzeitdauer hinweg zu betreiben, und dann, wenn das Heizgerät (12) als Standheizung zu betreiben ist, die Heizeinrichtung (26) oder/und das Zündorgan (28) mit geringerer Heizleistung über eine längere Startbetriebzeitdauer hinweg zu betreiben.

6. Heizsystem nach einem der Ansprüche 1 bis 5,
**dadurch gekennzeichnet, dass** die Ansteuervorrichtung (30) dazu ausgebildet ist, dann, wenn eine Versorgungsspannung unter einer Zuheizerbetrieb-Startspannungsschwelle ist oder unter diese fällt, bei vorzusehendem Zuheizerbetrieb das Heizgerät (12) mit der für den Standheizungsbetrieb vorzusehenden Startprozedur zu starten.

7. Heizsystem nach einem der Ansprüche 1 bis 6,
**dadurch gekennzeichnet, dass** die Ansteuervorrichtung (30) dazu ausgebildet ist, dann, wenn eine Versorgungsspannung unter einer Standheizungsbetriebs-Startspannungsschwelle ist oder unter diese fällt, das Starten des Heizgeräts (12) zu unterbinden oder zu beenden.

8. Verfahren zum Starten eines brennstoffbetriebenen Heizgerätes für ein Fahrzeug, umfassend die Maßnahmen:
a) Festlegen, ob das Heizgerät (12) als Standheizung oder als Zuheizer zu betreiben ist,
b) dann, wenn das Heizgerät (12) als Standheizung zu betreiben ist, Starten der Verbrennung mit einer Standheizungsbetrieb-Startprozedur,
c) dann, wenn das Heizgerät (12) als Zuheizer zu betreiben ist, Starten der Verbrennung mit einer von der Standheizungsbetrieb-Startprozedur sich unterscheidenden Zuheizerbetrieb-Startprozedur.

9. Verfahren nach Anspruch 8,
**dadurch gekennzeichnet, dass** die Standheizungsbetrieb-Startprozedur sich von der Zuheizerbetrieb-Startprozedur durch eine längere Zeitdauer der Startprozedur unterscheidet.

10. Verfahren nach Anspruch 8 oder 9,
**dadurch gekennzeichnet, dass** die Standheizungsbetrieb-Startprozedur sich von der Zuheizerbetrieb-Startprozedur durch eine geringere maximale Leistung wenigstens eines zum Starten elektrisch zu betreibenden Organs (26, 28) des Heizgerätes (12) unterscheidet.

11. Verfahren nach einem der Ansprüche 8 bis 9,
**dadurch gekennzeichnet, dass** die zur Durchführung der Standheizungsbetrieb-Startprozedur aufzubringende Energie näherungsweise der zur Durchführung der Zuheizerbetrieb-Startprozedur aufzubringenden Energie entspricht.

## Claims

1. A heating system for a vehicle, comprising a fuel-powered heating appliance (12) and an activating device (30) for activating the heating appliance (12) for the operation thereof, **characterised in that** the activating device (30) is designed, in a combustion operation starting phase, to activate the heating appliance (12) as a function of whether the latter is to be operated as a supplemental heater or as a stationary heater to carry out different starting procedures.

2. A heating system according to Claim 1, **characterised in that** the heating appliance (12) comprises:
- a combustion chamber assembly (14) with a porous evaporator medium (24),
- an electrically operated heating device (26) for heating the porous evaporator medium (24),
- an electrically operated ignition member (28) for igniting an air/fuel vapour mixture present in the combustion chamber assembly (14),
- a feed pump (16) for fluid fuel,
- a combustion air fan (18).

3. A heating system according to Claim 2, **characterised in that** the activating device (30) is designed, in the combustion operation starting phase, to operate the heating device (126) [sic] and/or the ignition member (28) as a function of the intended mode of operation of the heating appliance (12) as a stationary heater or supplemental heater with different heat output.

4. A heating system according to Claim 2 or 3, **characterised in that** the activating device (30) is designed, in the combustion operation starting phase, to operate the heating device (26) and/or the ignition member (28) as a function of the intended mode of operation of the heating appliance (12) as a stationary heater or supplemental heater over different starting operation periods.

5. A heating system according to Claim 3 or 4, **characterised in that**, if the heating appliance is to be operated as a supplemental heater, the activating device (30) is designed to operate the heating device (26) and/or the ignition member (28) with greater heat output beyond a shorter starting operation period and, if the heating appliance (12) is to be operated as a stationary heater, to operate the heating device (26) and/or the ignition member (28) with lower heat output beyond a longer starting operation period.

6. A heating system according to any one of Claims 1 to 5, **characterised in that**, if a supply voltage is below a supplemental heater operation starting voltage threshold or drops below it, the activating device (30) is designed, during intended supplemental heater operation, to start the heating appliance (12) with the starting procedure to be provided for the stationary heater operation.

7. A heating system according to any one of Claims 1 to 6, **characterised in that**, if a supply voltage is below a stationary heater operation starting voltage threshold or drops below it, the activating device (30) is designed to prevent or terminate the starting of the heating appliance (12).

8. A method of starting a fuel-powered heating appliance for a vehicle, comprising the steps:
a) determining whether the heating appliance (12) is to be operated as a stationary heater or as a supplemental heater,
b) if the heating appliance (12) is to be operated as stationary heater, starting the combustion with a stationary heater operation starting procedure,
c) if the heating appliance (12) is to be operated as a supplemental heater, starting the combustion with a supplemental heater operation starting procedure differing from the stationary heater operation starting procedure.

9. A method according to Claim 8, **characterised in that** the stationary heater operation starting procedure differs from the supplemental heater operation starting procedure by a longer duration of the starting procedure.

10. A method according to Claim 8 or 9, **characterised in that** the stationary heater operation starting procedure differs from the supplemental heater operation starting procedure by a lower maximum output of at least one member (26,28) of the heating appliance (12) to be operated electrically for starting.

11. A method according to one of Claims 8 to 9, **characterised in that** the energy to be applied to carry out the stationary heater operation starting procedure corresponds approximately to the energy to be applied to carry out the supplemental heater operation starting procedure.

## Revendications

1. Système de chauffage pour un véhicule, comprenant un appareil de chauffage à combustion (12) et un dispositif de commande (30) pour la commande de l'appareil de chauffage (12) et destiné à son fonctionnement, **caractérisé en ce que** le dispositif de commande (30) est conçu de façon que, dans une phase de démarrage du fonctionnement de la combustion, l'appareil de chauffage (12) peut être commandé en chauffage intermittent ou en chauffage continu pour la réalisation de procédures de démarrage différentes.

2. Système de chauffage selon la revendication 1, **caractérisé en ce que** l'appareil de chauffage (12) comprend :
- un ensemble de chambre de combustion (14) avec un moyen d'évaporateur poreux (24),
- un dispositif de chauffage pouvant être commandé électriquement (26) pour le chauffage du moyen d'évaporateur poreux (24),
- un organe d'allumage pouvant être commandé électriquement (28) pour l'allumage d'un mélange air/combustible vaporisé dans l'ensemble de chambre à combustion (14),
- une pompe d'amenée (16) pour le combustible liquide,
- une soufflante d'air de combustion (18).

3. Système de chauffage selon la revendication 2,
**caractérisé en ce que** le dispositif de commande (30) est conçu de telle sorte que, dans la phase de démarrage de fonctionnement combustion, le dispositif de chauffage (126) ou/et l'organe d'allumage (28) est actionné en fonction du type d'exploitation prévu de l'appareil de chauffage (12) en tant que chauffage continu ou chauffage d'appoint, avec différents capacités de chauffage.

4. Système de chauffage selon la revendication 2 ou 3,
**caractérisé en ce que** le dispositif de commande (30) est conçu de telle sorte que, dans la phase de démarrage du fonctionnement de combustion, le dispositif de chauffage (26) ou/et l'organe d'allumage (28) sont commandés en fonction du type d'exploitation prévu de l'appareil de chauffage (12) en tant que chauffage continu ou en tant que chauffage d'appoint pour des durées de fonctionnement de démarrage différentes.

5. Système de chauffage selon la revendication 3 ou 4,
**caractérisé en ce que** le dispositif de commande (30) est conçu de telle sorte que, lorsque l'appareil de chauffage (12) est utilisé en tant que chauffage d'appoint, le dispositif de chauffage (26) ou/et l'organe d'allumage (28) doivent être actionnés avec une plus forte capacité de chauffage pour une durée de fonctionnement de démarrage plus courte et ensuite, lorsque l'appareil de chauffage (12) doit être utilisé en tant que chauffage continu, le dispositif de chauffage (26) ou/et l'organe d'allumage (28) peuvent être commandés pour une capacité de chauffage plus faible sur une durée de fonctionnement de démarrage plus longue.

6. Système de chauffage selon l'une des revendications 1 à 5,
**caractérisé en ce que** le dispositif de commande (30) est conçu de telle sorte que, lorsqu'une tension d'alimentation se situe au-dessous d'un seuil de tension de démarrage-fonctionnement en chauffage d'appoint ou tombe au-dessous de ce seuil, pour un fonctionnement prévu en chauffage d'appoint, l'appareil de chauffage (12) doit être mis en route avec la procédure de démarrage prévue pour le fonctionnement en chauffage continu.

7. Système de chauffage selon l'une des revendications 1 à 6,
**caractérisé en ce que** le dispositif de chauffage (30) est conçu de telle sorte que, lorsqu'une tension d'alimentation se situe au-dessous d'un seuil de tension de démarrage-fonctionnement en chauffage continu ou tombe au-dessous de celui-ci, le démarrage de l'appareil de chauffage (12) doit être inhibé ou arrêté.

8. Procédé pour le démarrage d'un appareil de chauffage à combustion pour un véhicule, comprenant les mesures:
a) déterminer si l'appareil de chauffage (12) doit fonctionner en tant que chauffage continu ou en tant que chauffage d'appoint,
b) puis, lorsque l'appareil de chauffage (12) doit fonctionner en tant que chauffage continu, démarrer de la combustion par une procédure de démarrage de fonctionnement en chauffage continu,
c) puis, lorsque l'appareil de chauffage (12) doit être actionné en tant que chauffage d'appoint, démarrer de la combustion par une procédure de démarrage de fonctionnement en chauffage d'appoint différente de la procédure de démarrage de fonctionnement en chauffage continu.

9. Procédé selon la revendication 8,
**caractérisé en ce que** la procédure de démarrage de fonctionnement en chauffage continu se distingue de la procédure de démarrage de fonctionnement en chauffage d'appoint par une durée plus longue de la procédure de démarrage.

10. Procédé selon la revendication 8 ou 9,
**caractérisé en ce que** la procédure de démarrage de fonctionnement en chauffage continu se distingue de la procédure de démarrage en chauffage d'appoint par une capacité maximum plus faible au moins d'un organe à actionner électriquement pour le démarrage (26, 28) de l'appareil de chauffage (12).

11. Procédé selon l'une des revendications 8 à 9,
**caractérisé en ce que** l'énergie nécessaire pour la réalisation de la procédure de démarrage de fonctionnement en chauffage continu correspond approximativement à l'énergie nécessaire pour la réalisation de la procédure du démarrage en chauffage d'appoint.
